# EUROPEAN PATENT APPLICATION

(11) **EP 4 461 449 A1**
(43) Date of publication of application: **13.11.2024**
(21) Application number: 23745859.1
(22) Date of filing: 06.01.2023
(51) Int. Cl.: B23D 79/00, H01M 4/04

(54) **POLE PIECE CUTTING METHOD AND CONTROL SYSTEM**

(30) Priority: 26.01.2022 CN 202210096681
(71) Applicant: Contemporary Amperex Technology Co., Limited, Fujian 352100 (CN)
(72) Inventor: ZHENG, Qiuhui, Ningde City, Fujian 352100 (CN); HU, Jun, Ningde City, Fujian 352100 (CN); FENG, Shiping, Ningde City, Fujian 352100 (CN); CHEN, Canbin, Ningde City, Fujian 352100 (CN); CHANG, Wen, Ningde City, Fujian 352100 (CN); WU, Qing, Ningde City, Fujian 352100 (CN); LU, Haoran, Ningde City, Fujian 352100 (CN)
(74) Representative: Gong, Jinping
(86) International application number: PCT/CN2023/071036
(87) International publication number: WO 2023/142974

(57) **Abstract**

This application provides an electrode plate cutting method and control system, and relates to the field of battery technologies. The electrode plate cutting method includes: obtaining an offset distance between a detection reference (10) and a cutting position (2100) on an electrode plate (2000); obtaining, based on the offset distance and a distance between the detection reference (10) and a cutting device (40), an actual distance between the cutting position (2100) and the cutting device (40); and obtaining, based on the actual distance, a cutting time point for the cutting position (2100) to be conveyed to the cutting device (40), so that the cutting device (40) cuts at the cutting position (2100). Obtaining the offset distance between the detection reference (10) and the cutting position (2100) of the electrode plate (2000) is equivalent to obtaining a deviation from the detection reference (10) caused during transferring of the electrode plate (2000). In this way, the actual position of the cutting position (2100) can be obtained, so as to obtain the accurate time point when the cutting position (2100) is conveyed to the cutting device (40), so that the cutting device (40) can accurately cut at the cutting position (2100), thereby improving the cutting accuracy, and helping to improve the cutting and forming quality of the electrode plate (2000) and reliability and safety of batteries using such electrode plate (2000).

## Description

### CROSS-REFERENCE TO RELATED APPLICATIONS

This application claims priority to Chinese patent application No. 202210096681.0, filed on January 26, 2022 and entitled "ELECTRODE PLATE CUTTING METHOD AND CONTROL SYSTEM", which is incorporated herein by reference in its entirety.

### TECHNICAL FIELD

This application relates to the field of battery technologies and specifically to an electrode plate cutting method and control system.

### BACKGROUND

Lithium batteries for vehicles have been widely applied in fields such as electronic products, vehicles, and aerospace. As application environments and conditions become increasingly complex, higher requirements are imposed on batteries being used in terms of their safety performance, energy density, production costs, and the like.

During battery production, electrode plates need to be cut to make the length of electrode plates meet the requirements. The cutting quality of electrode plates has a great influence on the safety performance, energy density, production costs, and the like of batteries. Therefore, how the cutting quality of electrode plates is increased has become an urgent issue to be resolved during manufacturing of batteries.

### SUMMARY

Embodiments of this application provide an electrode plate cutting method and control system, so as to alleviate the problem of poor cutting quality of electrode plates.

According to a first aspect, an embodiment of this application provides an electrode plate cutting method including:
obtaining an offset distance between a detection reference and a cutting position on an electrode plate;
obtaining, based on the offset distance and a distance between the detection reference and a cutting device, an actual distance between the cutting position and the cutting device; and
obtaining, based on the actual distance, a cutting time point for the cutting position to be conveyed to the cutting device, and controlling, according to the cutting time point, the cutting device to cut at the cutting position.

In the above technical solution, obtaining the offset distance between the detection reference and the cutting position of the electrode plate is equivalent to obtaining a deviation from the detection reference caused by manufacturing and installation errors of a conveying device during transferring of the electrode plate. Then, obtaining the actual distance between the cutting position and the cutting device based on the offset distance and the distance between the detection reference and the cutting device is equivalent to obtaining an actual position of the cutting position. In this way, the accurate cutting time point when the cutting position is conveyed to the cutting device can be obtained, so that the cutting position can be accurately positioned at the cutting device, and the cutting device can accurately cut at the cutting position, thereby improving cutting accuracy, and helping to improve cutting and forming quality of the electrode plate and reliability and safety of batteries using such electrode plate.

In some embodiments of the first aspect of this application, the obtaining an offset distance between a detection reference and a cutting position on an electrode plate includes:
shooting the cutting position and the detection reference using a shooting apparatus to obtain the offset distance between the detection reference and the cutting position on the shooting apparatus.

In the above technical solution, the cutting position and the detection reference are shot using the shooting apparatus to obtain the offset distance between the detection reference and the cutting position, featuring simple and convenient method. This improves the efficiency of obtaining the offset distance, thereby improving the cutting efficiency of the electrode plate and facilitating continuous cutting of the electrode plate.

In some embodiments of the first aspect of this application, the electrode plate cutting method further includes:
obtaining an initial position of the cutting position; and
obtaining, based on a distance between the initial position and the detection reference, a shooting time point for the shooting apparatus to shoot the cutting position and the detection reference, and controlling, according to the shooting time point, the shooting apparatus to shoot the cutting position and the detection reference.

In the above technical solution, the shooting time point upon arrival of the cutting position for the shooting apparatus to shoot the cutting position and the detection reference is obtained based on the distance between the initial position and the detection reference, and the shooting apparatus is controlled, according to this shooting time point, to shoot the cutting position and the detection reference, so that the shooting apparatus can accurately shoot the cutting position and the detection reference, helping to obtain the accurate offset distance between the detection reference and the cutting position.

In some embodiments of the first aspect of this application, the obtaining an initial position of the cutting position includes:
detecting whether the cutting position arrives at the initial position using a fiber optic sensor.

In the above technical solution, whether the cutting position arrives at the initial position is detected using the fiber optic sensor, featuring simple and convenient method. This improves the efficiency of detection, thereby improving the cutting efficiency of the electrode plate and facilitating continuous cutting of the electrode plate.

In some embodiments of the first aspect of this application, the obtaining, based on a distance between the initial position and the detection reference, a shooting time point for the shooting apparatus to shoot the cutting position and the detection reference includes:
calculating, based on the distance between the initial position and the detection reference, a first angular displacement signal of an encoder on a transfer roller transferring the electrode plate, where the encoder is configured to detect a conveying position of the transfer roller, and the shooting time point is when the encoder reaches the first angular displacement; and
the controlling, according to the shooting time point, the shooting apparatus to shoot the cutting position and the detection reference includes:
   when the encoder reaches the first angular displacement, controlling the shooting apparatus to shoot the cutting position and the detection reference.

In the above technical solution, the shooting time point for the shooting apparatus is obtained based on the angular displacement of the encoder on the transfer roller transferring the electrode plate, so that the shooting apparatus can accurately shoot the detection reference and the cutting position, thereby accurately obtaining the offset distance between the detection reference and the cutting position.

In some embodiments of the first aspect of this application, the electrode plate cutting method further includes:
shooting the cutting position using the shooting apparatus and determining whether indentation of the cutting position is on the front or back of the electrode plate.

In the above technical solution, determining whether the indentation of the cutting position is on the front or back of the electrode plate is conducive to determining a sequence of feeding to both the front and back sides of the electrode plate. This ensures the quality of subsequent lamination, ensures accurate feeding to both the front and back sides of the electrode plate, reduces the risk of assembly errors during forming of an electrode assembly, and improves the assembly efficiency of the electrode assembly.

In some embodiments of the first aspect of this application, the obtaining, based on the actual distance, a cutting time point for the cutting position to be conveyed to the cutting device includes:
calculating, based on the actual distance, a second angular displacement signal of an encoder on a transfer roller transferring the electrode plate, where the cutting time point is when the encoder reaches the second angular displacement; and
the controlling, according to the cutting time point, the cutting device to cut at the cutting position includes:
   when the encoder reaches the second angular displacement, controlling the cutting device to cut at the cutting position.

In the above technical solution, the second angular displacement signal of the encoder on the transfer roller transferring the electrode plate is calculated based on the actual distance from the cutting position to the cutting device, that is, the accurate cutting time point is obtained, conducive to accurately cutting the electrode plate at the cutting position.

In some embodiments of the first aspect of this application, the electrode plate cutting method further includes:
after a current cutting position is obtained and the electrode plate is conveyed a preset distance, determining whether a next cutting position is obtained after the current cutting position is obtained and the electrode plate is conveyed the preset distance; and
if the next cutting position is not obtained, generating an alarm signal.

In the above technical solution, if the next cutting position is not detected within the preset distance after the current cutting position has been conveyed, it indicates unreasonable structural design of the electrode plate or faults of one or more devices in a detection system. An alarm signal needs to be generated to prompt maintenance and troubleshooting to avoid scrapping of the electrode plate and ineffective detection work.

According to a second aspect, an embodiment of this application provides an electrode plate cutting control system including a cutting device, a shooting apparatus, and a controller; where the cutting device is configured to cut an electrode plate; the shooting apparatus is configured to shoot a cutting position on the electrode plate and a detection reference; and the controller is in communication connection with the shooting apparatus and the cutting device, where the controller is configured to: calculate an offset distance based on the cutting position and the detection reference, calculate an actual distance between the cutting position and the cutting device based on the offset distance and a distance between the detection reference and the cutting device, calculate a cutting time point based on the actual distance, and control, according to the cutting time point, the cutting device to cut the electrode plate.

In the above technical solution, the cutting position and the detection reference are shot using the shooting apparatus to obtain the offset distance between the detection reference and the cutting position, featuring simple and convenient method. This improves the efficiency of obtaining the offset distance, thereby improving the cutting efficiency of the electrode plate and facilitating continuous cutting of the electrode plate. After the offset distance is obtained, the accurate time point when the cutting position is conveyed to the cutting device can be obtained, so that the cutting position can be accurately positioned at the cutting device, and the controller controls the cutting device to accurately cut at the cutting position, thereby improving cutting accuracy, and helping to improve cutting and forming quality of the electrode plate and reliability and safety of batteries using such electrode plate.

In some embodiments of the second aspect of this application, the electrode plate cutting control system further includes a fiber optic sensor disposed upstream of the shooting apparatus, where the fiber optic sensor is in communication connection with the controller, and the fiber optic sensor is configured to detect an initial position of the cutting position on the electrode plate; and
the controller is configured to obtain, based on a distance between the initial position and the detection reference, a shooting time point for the shooting apparatus to shoot the cutting position and the detection reference; and the controller controls, according to the shooting time point, the shooting apparatus to shoot the cutting position and the detection reference.

In the above technical solution, the initial position of the cutting position is obtained using the fiber optic sensor, featuring simple and convenient method. This improves the efficiency of detection, thereby improving the cutting efficiency of the electrode plate and facilitating continuous cutting of the electrode plate.

In some embodiments of the second aspect of this application, the electrode plate cutting control system further includes:
an encoder disposed on a transfer roller transferring the electrode plate, where the encoder is configured to detect a conveying position of the transfer roller, and the encoder is in communication connection with the controller;
the controller is further configured to calculate, based on the distance between the initial position and the detection reference, a first angular displacement signal of the encoder on the transfer roller transferring the electrode plate, and the shooting time point is when the encoder reaches the first angular displacement; and
the controller is further configured to: when the encoder reaches the first angular displacement, control the shooting apparatus to shoot the cutting position and the detection reference.

In the above technical solution, the shooting time point for the shooting apparatus to shoot the cutting position and the detection reference is obtained based on the angular displacement of the encoder, so that the shooting apparatus can accurately shoot the cutting position and the detection reference, and the cutting device can accurately cut the electrode plate at the cutting position.

In some embodiments of the second aspect of this application, the controller is further configured to calculate, based on the actual distance, a second angular displacement signal of the encoder on the transfer roller transferring the electrode plate, and the cutting time point is when the encoder reaches the second angular displacement; and
the controller is further configured to: when the encoder reaches the second angular displacement, control the cutting device to cut at the cutting position.

In the above technical solution, the controller controls, based on the angular displacement signal of the encoder, the cutting device to cut the electrode plate, so that the cutting device can accurately cut the electrode plate at the cutting position.

In some embodiments of the second aspect of this application, the shooting apparatus includes a CCD detection camera.

In the above technical solution, the CCD camera has high shooting accuracy, allowing for more accurate offset distance obtained.

### BRIEF DESCRIPTION OF DRAWINGS

To describe the technical solutions of the embodiments of this application more clearly, the following briefly describes the accompanying drawings required for describing the embodiments. It is appreciated that the accompanying drawings below show merely some embodiments of this application and thus should not be considered as limitations on the scope. Persons of ordinary skill in the art may still derive other related drawings from the accompanying drawings without creative efforts.
FIG. 1 is a flowchart of an electrode plate cutting method according to some embodiments of this application;
FIG. 2 is a schematic diagram of relative relations between a detection reference, a cutting position, and a cutting device according to some embodiments of this application;
FIG. 3 is a flowchart of an electrode plate cutting method according to some other embodiments of this application;
FIG. 4 is a flowchart of an electrode plate cutting method according to still some other embodiments of this application;
FIG. 5 is a schematic structural diagram of an electrode plate cutting device according to some embodiments of this application;
FIG. 6 is a schematic diagram of a shooting range of the shooting apparatus in FIG. 5;
FIG. 7 is a flowchart of an electrode plate cutting method according to yet some other embodiments of this application;
FIG. 8 is a flowchart of an electrode plate cutting method according to further still some other embodiments of this application;
FIG. 9 is a flowchart of an electrode plate cutting method according to still yet some other embodiments of this application;
FIG. 10 is a flowchart of an electrode plate cutting method according to yet still some other embodiments of this application; and
FIG. 11 a schematic diagram of a relative relation between a current cutting position and a next cutting position.

Reference signs: 100. electrode plate cutting control system; 10. detection reference; 20. shooting apparatus; 20a. shooting range; 30. fiber optic sensor; 40. cutting device; 300. transfer roller; 2000. electrode plate; 2100. cutting position; 2110. cutting hole; 2120. indentation; 2100a. current cutting position; and 2100b. next cutting position.

### DESCRIPTION OF EMBODIMENTS

To make the objectives, technical solutions, and advantages of the embodiments of this application clearer, the following clearly and completely describes the technical solutions in the embodiments of this application with reference to the accompanying drawings in the embodiments of this application. Apparently, the described embodiments are some but not all embodiments of this application. Generally, the components of the embodiments of this application as described and illustrated in the accompanying drawings herein can be arranged and designed in a variety of configurations.

Therefore, the following detailed description of the embodiments of this application as provided in the accompanying drawings is not intended to limit the scope of this application but merely to represent selected embodiments of this application. All other embodiments obtained by persons of ordinary skill in the art based on some embodiments of this application without creative efforts shall fall within the protection scope of this application.

It should be noted that, without conflict, the embodiments and features in the embodiments in this application may be combined with each other.

It should be noted that similar reference signs and letters indicate similar items in the following drawings, and therefore once an item is defined in one drawing, it does not need to be further defined or explained in the subsequent drawings.

In the description of the embodiments of this application, it should be noted that the orientations or positional relationships as indicated are orientations or positional relationships based on the accompanying drawings, or conventional orientations or positional relationships of products of this application, or orientations or positional relationships as conventionally understood by persons skilled in the art, and the orientations or positional relationships as indicated are merely for ease and brevity of description of this application rather than indicating or implying that the apparatuses or elements mentioned must have specific orientations or must be constructed or manipulated according to specific orientations, and therefore cannot be understood as limitations on this application. In addition, the terms "first", "second", "third", and the like are merely intended for distinguishing purposes and shall not be understood as any indication or implication of relative importance.

Currently, from the perspective of market development, application of traction batteries is being more extensive. Traction batteries have been not only used in energy storage power supply systems such as hydroelectric power plants, thermal power plants, wind power plants, and solar power plants, but also widely used in many other fields including electric transportation tools such as electric bicycles, electric motorcycles, and electric vehicles, military equipment, and aerospace. With the continuous expansion of application fields of traction batteries, market demands for traction batteries are also increasing.

In this application, the battery cell may include a lithium-ion secondary battery, a lithium-ion primary battery, a lithium-sulfur battery, a sodium-lithium-ion battery, a sodium-ion battery, a magnesium-ion battery, or the like. This is not limited in the embodiments of this application. The battery cell may be cylindrical, flat, cuboid, or of other shapes, which is not limited in the embodiments of this application either. Battery cells are typically divided into three types by packaging method: cylindrical cell, prismatic cell, and pouch cell. This is not limited in the embodiments of this application either.

The battery cell includes an electrode assembly and an electrolyte. The electrode assembly includes a positive electrode plate, a negative electrode plate, and a separator. The battery cell functions mainly relying on migration of metal ions between the positive electrode plate and the negative electrode plate. The positive electrode plate includes a positive electrode current collector and a positive electrode active substance layer. The positive electrode active substance layer is applied on a surface of the positive electrode current collector. The part of positive electrode current collector uncoated with the positive electrode active substance layer protrudes out of the part of positive electrode current collector coated with the positive electrode active substance layer and serves as at least part of a positive electrode tab. In some embodiments, a positive electrode tab of the positive electrode plate is the part of positive electrode current collector uncoated with the positive electrode active substance layer. In some other embodiments, to guarantee the structural strength of the positive electrode tab, the positive tab includes the part of positive electrode current collector uncoated with the positive electrode active substance layer and part of the positive electrode current collector coated with the positive electrode active substance layer. A lithium-ion battery is used as an example, for which, the positive electrode current collector may be made of aluminum, and the positive electrode active substance may be lithium cobaltate, lithium iron phosphate, ternary lithium, lithium manganate, or the like. The negative electrode plate includes a negative electrode current collector and a negative electrode active substance layer. The negative electrode active substance layer is applied on a surface of the negative electrode current collector. The part of negative electrode current collector uncoated with the negative electrode active substance layer protrudes out of the part of negative electrode current collector coated with the negative electrode active substance layer and serves as at least part of a negative electrode tab. In some embodiments, a negative electrode tab of the negative electrode plate is the part of negative electrode current collector uncoated with the negative electrode active substance layer. In some other embodiments, to guarantee the structural strength of the negative electrode tab, the negative tab includes the part of negative electrode current collector uncoated with the negative electrode active substance layer and part of the positive electrode current collector coated with the negative electrode active substance layer. The negative electrode current collector may be made of copper, and the negative electrode active substance may be carbon, silicon, or the like. To allow a large current to pass through without any fusing, multiple positive electrode tabs are provided and stacked together, and multiple negative electrode tabs are provided and stacked together. The separator may be made of PP (polypropylene, polypropylene), PE (polyethylene, polyethylene), or the like. In addition, the electrode assembly may be a wound structure or a laminated structure, but the embodiments of this application are not limited thereto.

For the electrode assembly, the positive electrode plate and negative electrode plate need to meet certain length requirements so that the wound electrode assembly has a sufficient number of turns to meet the performance requirements on the battery. Therefore, high requirements are imposed on the length control of the positive electrode plate and negative electrode plate, and a cutting device needs to cut the electrode plate at an accurate cutting position.

The inventors have found that due to manufacturing and installation errors of various parts of the electrode plate cutting device, the cutting position of the electrode plate cannot be accurately aligned with the cutting device, resulting in low cutting accuracy. This leads to large length error in the cut electrode plate, thereby degrading the forming quality of the electrode plate and the reliability and safety of the battery cell using such electrode plate.

Based on the above considerations, to alleviate the problem of low cutting accuracy caused by low positioning accuracy of the cutting position during electrode plate cutting, the inventors have provided an electrode plate cutting method through in-depth research. An offset distance between a detection reference and a cutting position of an electrode plate is obtained, then an actual distance between the cutting position and a cutting device is obtained based on the offset distance and a distance between the detection reference and the cutting device, and a time point for the cutting position to be conveyed to the cutting device is obtained based on the actual distance, so that the cutting device cuts at the cutting position.

Obtaining the offset distance between the detection reference and the cutting position of the electrode plate is equivalent to obtaining a deviation from the detection reference caused by manufacturing and installation errors of a conveying device during transferring the electrode plate. Then, obtaining the actual distance between the cutting position and the cutting device based on the offset distance and the distance between the detection reference and the cutting device is equivalent to obtaining an actual position of the cutting position. In this way, the accurate time point when the cutting position is conveyed to the cutting device can be obtained, so that the cutting position can be accurately positioned at the cutting device, and the cutting device can accurately cut at the cutting position, thereby improving cutting accuracy, and helping to improve cutting and forming quality of the electrode plate and reliability and safety of batteries using such electrode plate.

The electrode plate cutting method disclosed in the embodiments of this application can also be used in other fields where cutting and positioning are required, for example, film packaging, and food production. This is conducive to alleviating the problem of low cutting accuracy due to low positioning accuracy of the cutting position.

For ease of description, electrode plate cutting is used as an example to illustrate an electrode plate 2000 cutting method according to an embodiment of this application in the following embodiments.

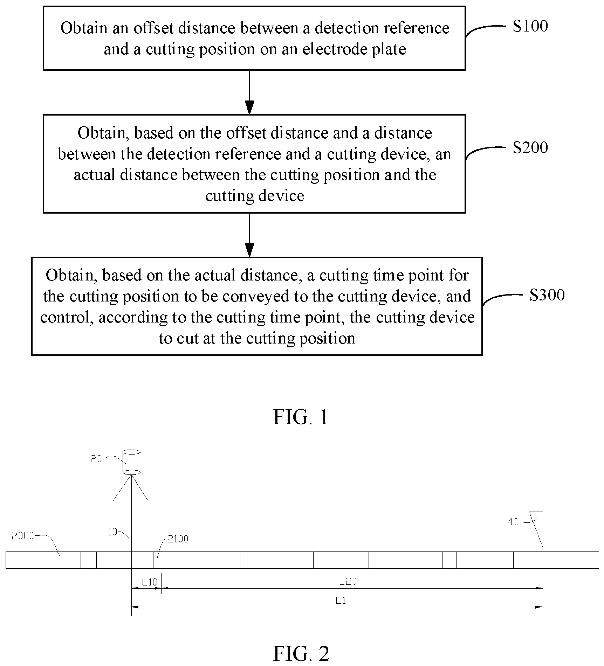

Refer to FIGs. 1 and 2. The electrode plate 2000 cutting method includes the following steps.

S 100. Obtain an offset distance between a detection reference 10 and a cutting position 2100 on an electrode plate 2000.

S200. Obtain, based on the offset distance and a distance between the detection reference 10 and a cutting device 40, an actual distance between the cutting position 2100 and the cutting device 40.

S300. Obtain, based on the actual distance, a cutting time point for the cutting position 2100 to be conveyed to the cutting device 40, and control, according to the cutting time point, the cutting device 40 to cut at the cutting position 2100.

The cutting position 2100 refers to a position on the electrode plate 2000 where the cutting device 40 cuts the electrode plate 2000, and the electrode plate 2000 is divided into two parts after cut at the cutting position 2100. The cutting device 40 may be a cutter, cutting laser, or the like.

The position of the detection reference 10 is fixed, and the distance between the detection reference 10 and the cutting device 40 is fixed and known. There are many reasons for the offset distance between the detection reference 10 and the cutting position 2100, such as manufacturing and installation errors of various structures of an electrode plate cutting control system 100.

Since the distance between the detection reference 10 and the cutting device 40 is known, combined with the offset distance between the detection reference 10 and the cutting position 2100, the actual distance from the cutting position 2100 to the cutting device 40 can be obtained. Therefore, it can be learned how much further the electrode plate 2000 needs to be conveyed for the cutting position 2100 to reach a position directly opposite the cutting device 40. When the cutting position 2100 reaches the position directly opposite the cutting device 40, indicating the accurate cutting time point, the cutting device 40 can be controlled to cut the electrode plate 2000, where the position cut by the cutting device 40 is the accurate cutting position 2100. For example, as shown in FIG. 2, the cutting device 40 is located downstream of the detection reference 10, and the electrode plate 2000 is conveyed in a direction from the detection reference 10 to the cutting device 40. The distance from the detection reference 10 to the cutting device 40 is defined as L1, the offset distance of the cutting position 2100 with respect to the detection reference 10 is L10, and the cutting position 2100 and the detection reference 10 are located on a same side of the cutting device 40. If the cutting position 2100 is closer to the cutting device 40 than the detection reference 10, the actual distance L20 from the cutting position 2100 to the cutting device 40 satisfies: L20 = L1 - L10 (as shown in FIG. 2). If the cutting position 2100 is farther away from the cutting device 40 than the detection reference 10, the actual distance L20 from the cutting position 2100 to the cutting device 40 satisfies: L20 = L1 + L 10. The electrode plate 2000 still needs to be conveyed a distance of L20 for the cutting position 2100 to reach the position directly opposite the cutting device 40. After the offset distance L10 of the cutting position 2100 with respect to the detection reference 10 is obtained, the electrode plate 2000 is continuously conveyed a distance of L20, with a time point thereof considered as the cutting time point when the cutting position 2100 is conveyed to the cutting device 40, and the cutting device 40 is controlled to cut the electrode plate 2000, so that the cutting device 40 cuts the electrode plate 2000 at the accurate cutting position 2100.

It should be noted that in the embodiments of this application, the terms "upstream" and "downstream" mentioned above and hereinafter refer to a production sequence, where upstream indicates earlier in the production sequence, and downstream indicates later in the production sequence. These terms do not limit spatial positions between the components. For example, if the detection reference 10 is located upstream of the cutting device 40, the cutting position 2100 on the electrode plate 2000 first passes the detection reference 10 and then passes the cutting device 40.

Obtaining the offset distance between the detection reference 10 and the cutting position 2100 of the electrode plate 2000 is equivalent to obtaining a deviation from the detection reference 10 caused by manufacturing and installation errors of a conveying device during transferring the electrode plate 2000. Then, obtaining the actual distance between the cutting position 2100 and the cutting device 40 based on the offset distance and the distance between the detection reference 10 and the cutting device 40 is equivalent to obtaining an actual position of the cutting position 2100. In this way, the accurate cutting time point when the cutting position 2100 is conveyed to the cutting device 40 can be obtained, so that the cutting position 2100 can be accurately positioned at the cutting device 40, and the cutting device 40 can accurately cut at the cutting position 2100, thereby improving the cutting accuracy, and helping to improve the cutting and forming quality of the electrode plate 2000 and reliability and safety of batteries using such electrode plate 2000.

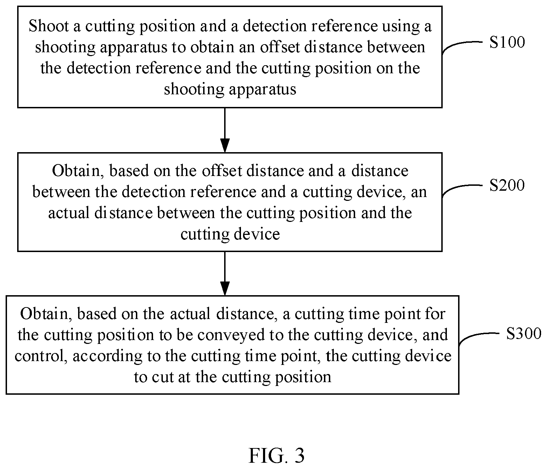

As shown in FIGs. 2 and 3, in some embodiments, the obtaining an offset distance between a detection reference 10 and a cutting position 2100 on an electrode plate 2000 includes:
shooting the cutting position 2100 and the detection reference 10 using a shooting apparatus 20 to obtain the offset distance between the detection reference 10 and the cutting position 2100 on the shooting apparatus 20.

The shooting apparatus 20 is disposed upstream of the cutting device 40.

The shooting apparatus 20 may be a CCD (Charge coupled Device) camera, a mobile phone camera, a video camera, or the like. After shooting, it is possible to accurately observe whether the cutting position 2100 is closer to or farther away from the cutting device 40 than the detection reference 10, so as to obtain the offset distance between the cutting position 2100 and the detection reference 10 and the actual distance between the cutting position 2100 and the cutting device 40. In this embodiment, the detection reference 10 is a reference set within the shooting apparatus 20.

In other embodiments, if necessary, the offset distance between the detection reference 10 and the cutting position 2100 can also be obtained by other means.

The cutting position 2100 and the detection reference 10 are shot using the shooting apparatus 20 to obtain the offset distance between the detection reference 10 and the cutting position 2100 on the shooting apparatus 20, featuring simple and convenient method. This improves the efficiency of obtaining the offset distance, thereby improving the cutting efficiency of the electrode plate 2000 and facilitating continuous cutting of the electrode plate 2000.

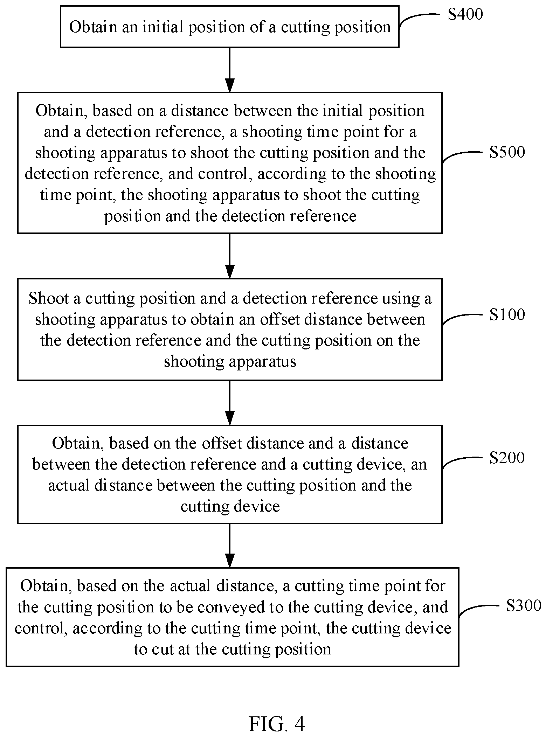

As shown in FIGs. 4, 5, and 6, in some embodiments, the electrode plate 2000 cutting method further includes the following steps.

S400. Obtain an initial position of the cutting position 2100.

S500. Obtain, based on a distance between the initial position and the detection reference 10, a shooting time point for the shooting apparatus 20 to shoot the cutting position 2100 and the detection reference 10, and control, according to the shooting time point, the shooting apparatus 20 to shoot the cutting position 2100 and the detection reference 10.

The initial position of the cutting position 2100 is located upstream of the detection reference 10. Since the distance between the initial position and the detection reference 10 is known, it is possible to know how much further the electrode plate 2000 needs to be conveyed for the cutting position 2100 to enter a shooting range 20a of the shooting apparatus 20, so as to obtain the shooting time point for the shooting apparatus 20 to shoot the cutting position 2100 and the detection reference 10. When the cutting position 2100 reaches the shooting range 20a of the shooting apparatus 20, the shooting apparatus 20 can be controlled to shoot the cutting position 2100. In other words, shooting of the shooting apparatus 20 is triggered based on the distance between the detection reference 10 and the initial position.

For example, the distance between the initial position and the detection reference 10 is defined as L2. The electrode plate 2000 still needs to be conveyed a distance of L2 for the cutting position 2100 to enter the shooting range 20a of the shooting apparatus 20. After the initial position of the cutting position 2100 is obtained, the electrode plate 2000 is continuously conveyed the distance of L2, with a time point thereof considered as the shooting time point when the cutting position 2100 is conveyed to the shooting range 20a of the shooting apparatus 20, and the shooting apparatus 20 is controlled to shoot the cutting position 2100.

The shooting time point upon arrival of the cutting position 2100 for the shooting apparatus 20 to shoot the cutting position 2100 and the detection reference 10 is obtained based on the distance between the initial position and the detection reference 10, and the shooting apparatus 20 is controlled, according to this shooting time point, to shoot the cutting position 2100 and the detection reference 10, so that the shooting apparatus 20 can accurately shoot the cutting position 2100 and the detection reference 10, helping to obtain the accurate offset distance between the detection reference 10 and the cutting position 2100.

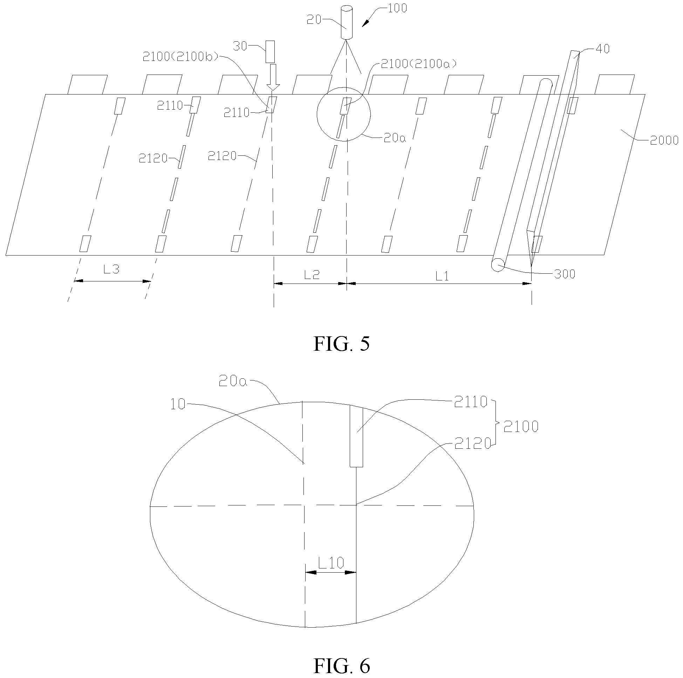

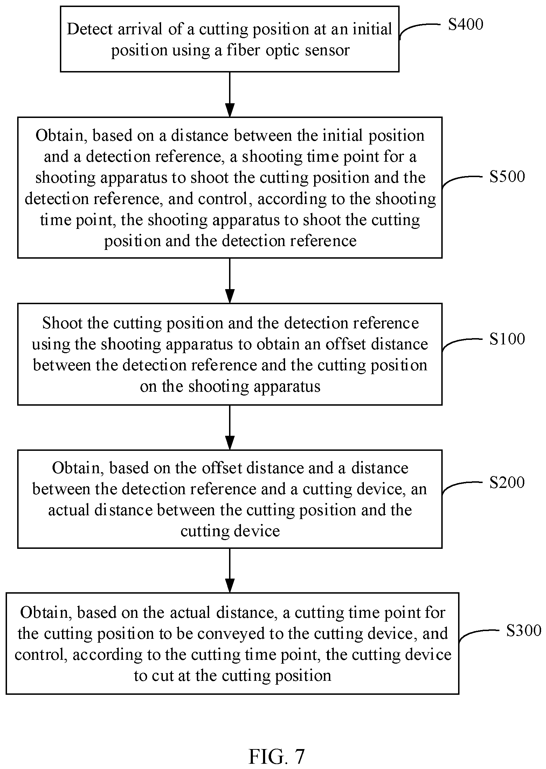

As shown in FIGs. 5, 6, and 7, in some embodiments, the obtaining an initial position of the cutting position 2100 includes:
detecting arrival of the cutting position 2100 at the initial position using a fiber optic sensor 30.

The fiber optic sensor 30 is disposed upstream of the shooting apparatus 20. The position of the fiber optic sensor 30 is fixed. Since the cutting position 2100 can only be detected when conveyed to the position of the fiber optic sensor 30, the initial position of the cutting position 2100 can be understood as a position on the electrode plate 2000 directly opposite the fiber optic sensor 30. Therefore, the distance between the initial position of the cutting position 2100 and the detection reference 10 of the shooting apparatus 20 can be understood as the distance between the fiber optic sensor 30 and the detection reference 10 of the shooting apparatus 20.

As shown in FIG. 5, the fiber optic sensor 30 includes a transmitter and a receiver, where the transmitter and receiver are respectively located on two sides of the electrode plate 2000 in a thickness direction. The receiver is used to receive light signals emitted by the transmitter. The cutting position 2100 is provided with a cutting hole 2110 and an indentation 2120, where the cutting hole 2110 penetrate the two sides of the electrode plate 2000 in the thickness direction. When the cutting position 2100 is conveyed to the fiber optic sensor 30, a light signal emitted by the transmitter can pass through the cutting hole 2110 and be received by the receiver, that is, the cutting position 2100 is detected, so that arrival of the cutting position 2100 at the initial position is detected. When the cutting position 2100 has not been moved to the position of the fiber optic sensor 30, a light signal emitted by the transmitter cannot pass through the electrode plate 2000 and be received by the receiver.

Certainly, in other embodiments, the arrival of the cutting position 2100 at the initial position can also be detected by using other detection methods.

Whether the cutting position 2100 arrives at the initial position is detected using the fiber optic sensor 30, featuring simple and convenient method. This improves the efficiency of detection, thereby improving the cutting efficiency of the electrode plate 2000 and facilitating continuous cutting of the electrode plate 2000.

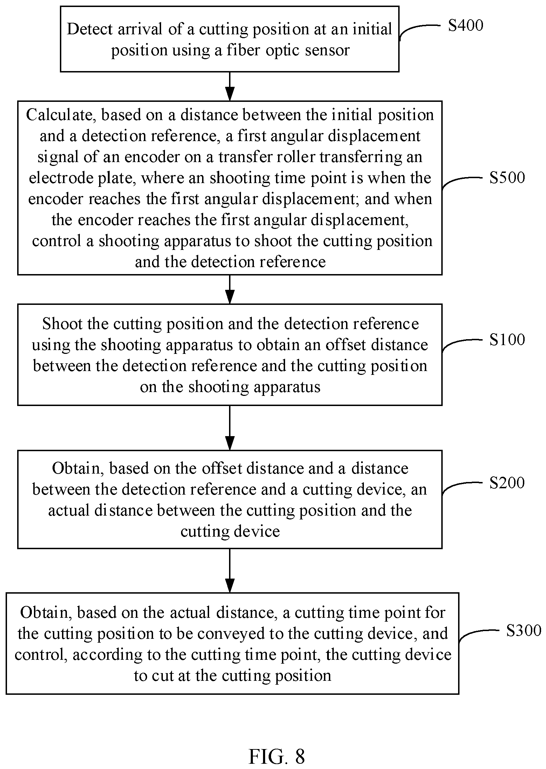

Still refer to FIG. 8. In some embodiments, the obtaining, based on a distance between the initial position and the detection reference 10, a shooting time point for the shooting apparatus 20 to shoot the cutting position 2100 and the detection reference 10 includes:
calculating, based on the distance between the initial position and the detection reference 10, a first angular displacement signal of an encoder on a transfer roller 300 transferring the electrode plate 2000, where the encoder is configured to detect a conveying position of the transfer roller 300, and the shooting time point is when the encoder reaches the first angular displacement; and
the controlling, according to the shooting time point, the shooting apparatus to shoot the cutting position 2100 and the detection reference 10 includes:
   when the encoder reaches the first angular displacement, controlling the shooting apparatus to shoot the cutting position 2100 and the detection reference 10.

The encoder is a device that converts angular or linear positions into electrical signals. The encoder is disposed on the transfer roller 300, and the number of rotations of the transfer roller 300 corresponds to an angular displacement of the encoder. After the fiber optic sensor 30 detects the cutting position 2100, an angular displacement of the encoder is obtained so as to obtain the initial position of the cutting position 2100. For example, when the transfer roller 300 conveys the electrode plate 2000 such that the cutting position 2100 is conveyed to the position of the fiber optic sensor 30, an angular displacement of the encoder is X10. The distance between the initial position and the detection reference 10 is L2, and after theoretical calculation, L2 corresponds to an angular displacement of X11 of the encoder. In this case, when the transfer roller 300 conveys the electrode plate 2000 such that the cutting position 2100 from the initial position reaches the shooting range 20a of the shooting apparatus 20, a corresponding angular displacement of the encoder is X1 = X10 + X11. X1 is the first angular displacement, and when the angular displacement of the encoder reaches X1, it is considered that the shooting time point is reached, which is also the time point when the cutting position 2100 is conveyed to the shooting range 20a of the shooting apparatus 20. The shooting apparatus 20 is then controlled to shoot the cutting position 2100 and the detection reference 10 based on the angular displacement X1 (the first angular displacement) of the encoder.

The shooting time point for the shooting apparatus 20 is obtained based on the angular displacement of the encoder on the transfer roller 300 transferring the electrode plate 2000, so that the shooting apparatus 20 can accurately shoot the detection reference 10 and the cutting position 2100, thereby accurately obtaining the offset distance between the detection reference 10 and the cutting position 2100.

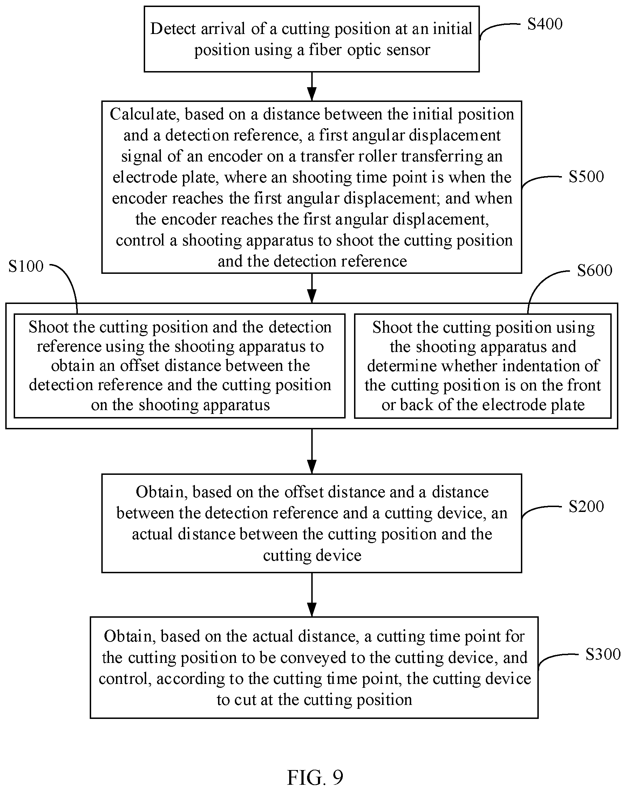

As shown in FIG. 9, in some embodiments, the electrode plate 2000 cutting method further includes the following step.

S600. Shoot the cutting position 2100 using the shooting apparatus 20 and determine whether indentation 2120 of the cutting position 2100 is on the front or back of the electrode plate 2000.

For a folded electrode assembly, the indentation 2120 at the cutting position 2100 of the electrode plate 2000 is located at a bent part during folding, reducing the possibility of the bent part being broken or compressed due to bending. For example, if the cut electrode plate 2000 is a negative electrode plate 2000, a positive electrode plate 2000 needs to be conveyed on two sides of the negative electrode plate 2000 in a thickness direction. Depending on whether the indentation 2120 is on the front or back, it can be controlled whether to convey the positive electrode plate 2000 to the front or back.

Determining whether the indentation 2120 of the cutting position 2100 is on the front or the back of the electrode plate 2000 is conducive to confirming a sequence of feeding to both the front and back sides of the electrode plate 2000. This ensures the quality of subsequent lamination, ensures accurate feeding to both the front and back sides of the electrode plate 2000, reduces the risk of feeding errors during forming of the electrode assembly, and improves the assembly efficiency of the electrode assembly.

Still refer to FIG. 9. In some embodiments, the obtaining, based on the actual distance, a cutting time point for the cutting position 2100 to be conveyed to the cutting device 40 includes:
calculating, based on the actual distance, a second angular displacement signal of the encoder on the transfer roller 300 transferring the electrode plate 2000, where the cutting time point is when the encoder reaches the second angular displacement; and
the controlling, according to the cutting time point, the cutting device 40 to cut at the cutting position 2100 includes:
   when the encoder reaches the second angular displacement, controlling the cutting device 40 to cut at the cutting position 2100.

For example, when the transfer roller 300 conveys the electrode plate 2000 such that the cutting position 2100 reaches the shooting range 20a of the shooting apparatus 20, a corresponding angular displacement of the encoder is X1 (the first angular displacement). The actual distance L20 from the cutting position 2100 to the cutting device 40 is calculated theoretically, and L20 corresponds to an angular displacement of X12 of the encoder. When the transfer roller 300 conveys the electrode plate 2000 such that the cutting position 2100 moves from the shooting range 20a of the shooting apparatus 20 to the cutting device 40, a corresponding angular displacement of the encoder is X2 = X1 + X12, where X2 is the second angular displacement. When the angular displacement of the encoder reaches X2, indicating the cutting time point, the time point when the cutting position 2100 is conveyed to the cutting device 40, the cutting device 40 is controlled, based on the angular displacement X2 (the second angular displacement) of the encoder, to cut the electrode plate 2000.

The second angular displacement signal of the encoder on the transfer roller 300 transferring the electrode plate 2000 is calculated based on the actual distance from the cutting position 2100 to the cutting device 40, that is, the accurate cutting time point is obtained, conducive to accurately cutting the electrode plate 2000 at the cutting position 2100.

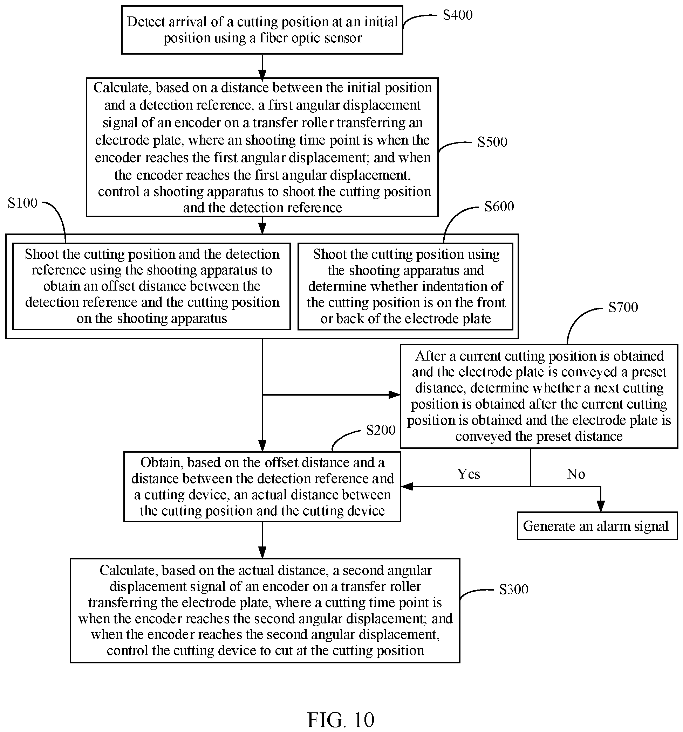

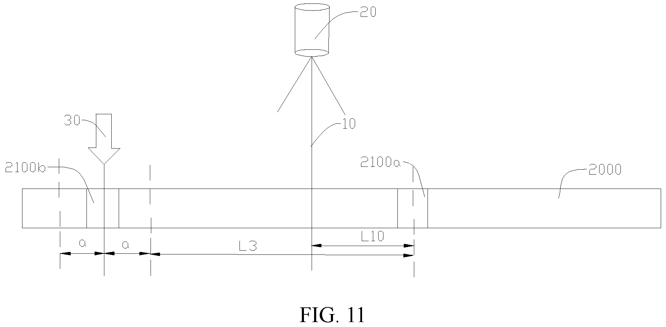

Refer to FIGs. 5, 10, and 11. In some embodiments, the electrode plate 2000 cutting method further includes the following step.

S700. After a current cutting position 2100a is obtained and the electrode plate 2000 is conveyed a preset distance, determine whether a next cutting position 2100b is obtained after the current cutting position 2100a is obtained and the electrode plate 2000 is conveyed the preset distance; and
if the next cutting position 2100b is not obtained, generate an alarm signal.

A distance between two adjacent cutting positions 2100 is defined as L3. The electrode plate 2000 is continuously conveyed, and after an initial position of the current cutting position 2100a is obtained, under normal circumstances, the fiber optic sensor 30 can detect the next cutting position 2100b when the electrode plate 2000 is conveyed into a range of L3+a. If the next cutting position is detected, the above steps are continuously performed. If the next cutting position is not detected, it may be that the electrode plate 2000 has no cutting hole 2110 at that position, or the cutting hole 2110 is not punched through, or the fiber optic sensor 30 is faulty, or there is a fault in another device. An alarm signal is then generated, prompting the need for maintenance. With combination of theoretical prediction and actual detection, in a case that the fiber optic sensor 30 is faulty, the time point when the next cutting position 2100b reaches the shooting range 20a of the shooting apparatus 20 can be obtained through theoretical calculation. In this way, detection can be carried out using the shooting apparatus, avoiding data loss of the electrode plate 2000 and effectively reducing the scrap rate during manufacturing of electrode assemblies.

+a represents an allowable range of error for the distance between two adjacent cutting positions 2100.

The preset distance may be nL3+a, where n is a natural number greater than or equal to 1.

If the next cutting position 2100b is not detected within the preset distance after the current cutting position 2100a has been conveyed, it indicates unreasonable structural design of the electrode plate 2000 or faults of one or more devices in a detection system. An alarm signal needs to be generated to prompt maintenance and troubleshooting to avoid scrapping of the electrode plate 2000 and ineffective detection work.

Still refer to FIG. 5. An embodiment of this application provides an electrode plate cutting control system 100. The electrode plate cutting control system 100 including a cutting device 40, a shooting apparatus 20, and a controller (not shown in the figure); where the cutting device 40 is configured to cut an electrode plate 2000; the shooting apparatus 20 is configured to shoot a cutting position 2100 on the electrode plate 2000 and a detection reference 10; and the controller is in communication connection with the shooting apparatus 20 and the cutting device 40, where the controller is configured to: calculate an offset distance based on the cutting position 2100 and the detection reference 10, calculate an actual distance between the cutting position 2100 and the cutting device 40 based on the offset distance and a distance between the detection reference 10 and the cutting device 40, calculate a cutting time point based on the actual distance, and control, according to the cutting time point, the cutting device to cut the electrode plate.

The shooting apparatus 20 is disposed upstream of the cutting device 40, and the cutting device 40 is disposed downstream of the shooting apparatus 20. The controller is disposed on the encoder (not shown in the figure) on the transfer roller 300 transferring the electrode plate 2000, which controls, based on an angular displacement, the shooting apparatus 20 to shoot the cutting position 2100 and the detection reference 10, and controls the cutting device 40 to cut the electrode plate 2000. The controller is configured to receive an electrical signal representing an angular position of the encoder and control the shooting apparatus 20 to shoot and/or control, based on the electrical signal, the cutting device 40 to cut the electrode plate.

The cutting position 2100 and the detection reference 10 are shot using the shooting apparatus 20 to obtain the offset distance between the detection reference 10 and the cutting position 2100 on the shooting apparatus 20, featuring simple and convenient method. This improves the efficiency of obtaining the offset distance, thereby improving the cutting efficiency of the electrode plate 2000 and facilitating continuous cutting of the electrode plate 2000. After the offset distance is obtained, the accurate time point when the cutting position 2100 is conveyed to the cutting device 40 can be obtained, so that the cutting position 2100 can be accurately positioned at the cutting device 40, and the controller controls the cutting device 40 to accurately cut at the cutting position 2100, thereby improving the cutting accuracy, and helping to improve the cutting and forming quality of the electrode plate 2000 and reliability and safety of batteries using such electrode plate 2000.

Still refer to FIG. 5. In some embodiments, the electrode plate cutting control system 100 further includes a fiber optic sensor 30 disposed upstream of the shooting apparatus 20, where the fiber optic sensor 30 is in communication connection with the controller, and the fiber optic sensor 30 is configured to detect an initial position of the cutting position on the electrode plate 2000; and the controller is configured to obtain, based on a distance between the initial position and the detection reference 10, a shooting time point for the shooting apparatus 20 to shoot the cutting position 2100 and the detection reference 10; and the controller controls, according to the shooting time point, the shooting apparatus 20 to shoot the cutting position 2100 and the detection reference 10.

The fiber optic sensor 30 is disposed upstream of the shooting apparatus 20. After the fiber optic sensor 30 detects the cutting position 2100, the initial position of the cutting position 2100 is obtained based on a corresponding angular displacement of the encoder at that time. Combined with the angular displacement of the encoder corresponding to the distance between the initial position and the detection reference 10 of the shooting apparatus 20, an angular displacement of the encoder when the transfer roller 300 conveys the cutting position 2100 from the initial position to the shooting position within the shooting range 20a can be obtained. After the cutting position 2100 is conveyed to the shooting range 20a of the shooting apparatus 20, the controller controls the shooting apparatus 20 to shoot, based on an electrical signal representing the angular displacement of the encoder when the cutting position 2100 is conveyed from the initial position to the shooting position within the shooting range 20a.

The initial position of the cutting position 2100 is obtained using the fiber optic sensor 30, featuring simple and convenient method. This improves the efficiency of detection, thereby improving the cutting efficiency of the electrode plate 2000 and facilitating continuous cutting of the electrode plate 2000.

In some embodiments, the electrode plate cutting control system 100 further includes an encoder (not shown in the figure) disposed on a transfer roller 300 transferring the electrode plate 2000, where the encoder is configured to detect a conveying position of the transfer roller 300, and the encoder is in communication connection with the controller.

The controller is configured to calculate, based on the distance between the initial position and the detection reference 10, a first angular displacement signal of the encoder on the transfer roller 300 transferring the electrode plate 2000, and the shooting time point is when the encoder reaches the first angular displacement; and the controller is further configured to: when the encoder reaches the first angular displacement, control the shooting apparatus 20 to shoot the cutting position 2100 and the detection reference 10.

After the cutting position 2100 reaches the shooting range 20a of the shooting apparatus 20, based on an angular displacement of the encoder corresponding to the cutting position 2100 at that time, combined with the angular displacement of the encoder corresponding to the actual distance between the cutting position 2100 and the cutting device 40, the angular displacement of the encoder when the transfer roller 300 conveys the cutting position 2100 from the shooting range 20a of the shooting apparatus 20 to the cutting device 40 can be obtained, which is the first angular displacement. After the cutting position 2100 is conveyed to the cutting device 40, the angular displacement of the encoder reaches the first angular displacement, indicating the shooting time point, and the controller controls, based on the first angular displacement, the shooting apparatus 20 to shoot the cutting position 2100 and the detection reference 10.

The shooting time point for the shooting apparatus 20 to shoot the cutting position 2100 and the detection reference 10 is obtained based on the angular displacement of the encoder, so that the shooting apparatus 20 can accurately shoot the cutting position 2100 and the detection reference 10, which facilitates controlling of the cutting device 40 to accurately cut the electrode plate 2000 at the cutting position 2100.

In some embodiments, the controller is further configured to calculate, based on the actual distance, a second angular displacement signal of the encoder on the transfer roller 300 transferring the electrode plate 2000, and the cutting time point is when the encoder reaches the second angular displacement; and the controller is further configured to: when the encoder reaches the second angular displacement, control the cutting device 40 to cut at the cutting position 2100.

When the cutting position 2100 is within the shooting range 20a of the shooting apparatus 20, the angular displacement of the encoder is the first angular displacement. Combined with the actual distance between the cutting position 2100 within the shooting range 20a of the shooting apparatus 20 and the cutting device 40, the controller can calculate the angular displacement of the encoder when the cutting position 2100 reaches the cutting device 40, which is the second angular displacement and also indicates the cutting time point. When the angular displacement of the encoder is the second angular displacement, the controller controls the cutting device 40 to cut the electrode plate 2000 at the cutting position 2100.

The controller controls, based on the angular displacement signal of the encoder, the cutting device 40 to cut the electrode plate 2000, so that the cutting device 40 can accurately cut the electrode plate 2000 at the cutting position 2100.

Still refer to FIG. 5. In some embodiments, the shooting apparatus 20 includes a CCD detection camera.

CCD is a semiconductor device that can convert optical images into digital signals. The CCD camera has advantages such as small size, light weight, being unaffected by magnetic fields, and resistance to vibration and impact. Therefore, the CCD camera has high shooting accuracy, allowing for more accurate offset distance obtained.

An embodiment of this application provides an electrode plate 2000 forming method including:
detecting an initial position of the cutting position 2100 using a fiber optic sensor 30;
calculating, based on a distance between the initial position and a detection reference 10 of the CCD camera, a first angular displacement signal of an encoder on a transfer roller 300 transferring an electrode plate 2000, to obtain a shooting time point for the CCD camera, the shooting time point being when the encoder reaches the first angular displacement, and controlling, based on the first angular displacement, the CCD camera to shoot the cutting position 2100 and the detection reference 10;
shooting the cutting position 2100 and the detection reference 10 using the CCD camera to obtain an offset distance between the detection reference 10 and the cutting position 2100 on the CCD camera;
obtaining, based on the offset distance and a distance between the detection reference 10 and a cutting device 40, an actual distance between the cutting position 2100 and the cutting device 40; and
calculating, by the controller based on the actual distance, a second angular displacement signal of the encoder on the transfer roller 300 transferring the electrode plate 2000, to obtain a cutting time point for the cutting position 2100 to reach the cutting device 40, the cutting time point being when the encoder reaches the second angular displacement, and controlling, by the controller based on the second angular displacement, the cutting device 40 to cut at the cutting position 2100.

The electrode plate 2000 is cut using the above method, so that the cutting position 2100 can be accurately positioned at the cutting device 40, and the cutting device 40 can accurately cut at the cutting position 2100, thereby improving the cutting accuracy, and helping to improve the cutting and forming quality of the electrode plate 2000 and reliability and safety of batteries using such electrode plate 2000.

The foregoing descriptions are merely preferred embodiments of this application which are not intended to limit this application. Persons skilled in the art understand that this application may have various modifications and variations. Any modifications, equivalent replacements, and improvements made without departing from the spirit and principle of this application shall fall within the protection scope of this application.

## Claims

1. An electrode plate cutting method, comprising:
obtaining an offset distance between a detection reference and a cutting position on an electrode plate;
obtaining, based on the offset distance and a distance between the detection reference and a cutting device, an actual distance between the cutting position and the cutting device; and
obtaining, based on the actual distance, a cutting time point for the cutting position to be conveyed to the cutting device, and controlling, according to the cutting time point, the cutting device to cut at the cutting position.

2. The electrode plate cutting method according to claim 1, wherein the obtaining an offset distance between a detection reference and a cutting position on an electrode plate comprises:
shooting the cutting position and the detection reference using a shooting apparatus to obtain the offset distance between the detection reference and the cutting position on the shooting apparatus.

3. The electrode plate cutting method according to claim 2, wherein the electrode plate cutting method further comprises:
obtaining an initial position of the cutting position; and
obtaining, based on a distance between the initial position and the detection reference, a shooting time point for the shooting apparatus to shoot the cutting position and the detection reference, and controlling, according to the shooting time point, the shooting apparatus to shoot the cutting position and the detection reference.

4. The electrode plate cutting method according to claim 3, wherein the obtaining an initial position of the cutting position comprises:
detecting arrival of the cutting position at the initial position using a fiber optic sensor.

5. The electrode plate cutting method according to claim 3 or 4, wherein the obtaining, based on a distance between the initial position and the detection reference, a shooting time point for the shooting apparatus to shoot the cutting position and the detection reference comprises:
calculating, based on the distance between the initial position and the detection reference, a first angular displacement signal of an encoder on a transfer roller transferring the electrode plate, wherein the encoder is configured to detect a conveying position of the transfer roller, and the shooting time point is when the encoder reaches the first angular displacement; and
the controlling, according to the shooting time point, the shooting apparatus to shoot the cutting position and the detection reference comprises:
when the encoder reaches the first angular displacement, controlling the shooting apparatus to shoot the cutting position and the detection reference.

6. The electrode plate cutting method according to any one of claims 2 to 5, wherein the electrode plate cutting method further comprises:
shooting the cutting position using the shooting apparatus and determining whether indentation of the cutting position is on the front or back of the electrode plate.

7. The electrode plate cutting method according to any one of claims 1 to 6, wherein the obtaining, based on the actual distance, a cutting time point for the cutting position to be conveyed to the cutting device comprises:
calculating, based on the actual distance, a second angular displacement signal of an encoder on a transfer roller transferring the electrode plate, wherein the cutting time point is when the encoder reaches the second angular displacement; and
the controlling, according to the cutting time point, the cutting device to cut at the cutting position comprises: when the encoder reaches the second angular displacement, controlling the cutting device to cut at the cutting position.

8. The electrode plate cutting method according to any one of claims 1 to 6, wherein the electrode plate cutting method further comprises:
after a current cutting position is obtained and the electrode plate is conveyed a preset distance, determining whether a next cutting position is obtained after the current cutting position is obtained and the electrode plate is conveyed the preset distance; and
if the next cutting position is not obtained, generating an alarm signal.

9. An electrode plate cutting control system, comprising:
a cutting device configured to cut an electrode plate;
a shooting apparatus configured to shoot a cutting position on the electrode plate and a detection reference; and
a controller in communication connection with the shooting apparatus and the cutting device, wherein the controller is configured to: calculate an offset distance based on the cutting position and the detection reference, calculate an actual distance between the cutting position and the cutting device based on the offset distance and a distance between the detection reference and the cutting device, calculate a cutting time point based on the actual distance, and control, according to the cutting time point, the cutting device to cut the electrode plate.

10. The electrode plate cutting control system according to claim 9, wherein the electrode plate cutting control system further comprises:
a fiber optic sensor disposed upstream of the shooting apparatus, wherein the fiber optic sensor is in communication connection with the controller, and the fiber optic sensor is configured to detect an initial position of the cutting position on the electrode plate; and
the controller is configured to obtain, based on a distance between the initial position and the detection reference, a shooting time point for the shooting apparatus to shoot the cutting position and the detection reference; and the controller controls, according to the shooting time point, the shooting apparatus to shoot the cutting position and the detection reference.

11. The electrode plate cutting control system according to claim 10, wherein the electrode plate cutting control system further comprises:
an encoder disposed on a transfer roller transferring the electrode plate, wherein the encoder is configured to detect a conveying position of the transfer roller, and the encoder is in communication connection with the controller;
the controller is further configured to calculate, based on the distance between the initial position and the detection reference, a first angular displacement signal of the encoder on the transfer roller transferring the electrode plate, and the shooting time point is when the encoder reaches the first angular displacement; and
the controller is further configured to: when the encoder reaches the first angular displacement, control the shooting apparatus to shoot the cutting position and the detection reference.

12. The electrode plate cutting control system according to claim 11, wherein the controller is further configured to calculate, based on the actual distance, a second angular displacement signal of the encoder on the transfer roller transferring the electrode plate, and the cutting time point is when the encoder reaches the second angular displacement; and
the controller is further configured to: when the encoder reaches the second angular displacement, control the cutting device to cut at the cutting position.

13. The electrode plate cutting control system according to any one of claims 9 to 12, wherein the shooting apparatus comprises a CCD detection camera.
